(19) Europäisches Patentamt
European Patent Office
Office européen des brevets

(11) **EP 3 203 296 B1**

(12) **EUROPEAN PATENT SPECIFICATION**

(45) Date of publication and mention
of the grant of the patent:
**23.05.2018 Bulletin 2018/21**

(51) Int Cl.:
***G02B 26/00*** *(2006.01)*

(21) Application number: **16020027.5**

(22) Date of filing: **02.02.2016**

(54) **CENTROSYMMETRIC CHANGER FOR OPTICAL ELEMENTS**

PUNKTSYMMETRISCHER WECHSLER FÜR OPTISCHE ELEMENTE

CHANGEUR DE CENTROSYMÉTRIQUE POUR ÉLÉMENTS OPTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.08.2017 Bulletin 2017/32**

(73) Proprietor: **Baader, Thomas
82291 Mammendorf (DE)**

(72) Inventor: **Baader, Thomas
82291 Mammendorf (DE)**

(56) References cited:
**WO-A1-2004/001284    GB-A- 802 427**

## Description

## Field of invention

The present invention belongs in the field of adjusting means of optical elements. It relates to optical systems for visual observation and in particular optical systems with attached image capture device or suchlike. A typical application is to serve as a filter wheel, which is being mounted in the optical path of a telescope in front of an image capture device or eye piece in order to transmit only a desired part of the incoming light's spectrum.

## Conventions used in this document

A usual convention used for describing optical systems is using a carthesian coordinate system wherein the z-axis is the rotational axis of symmetry of an optical system and optical elements at the intersections with the z-axis are described in the x-y-plane. In this document the z-axis is referred to as the axis of symmetry of the optical system and thus the direction of light propagation. Angles are denoted in radians.

## Background of the invention

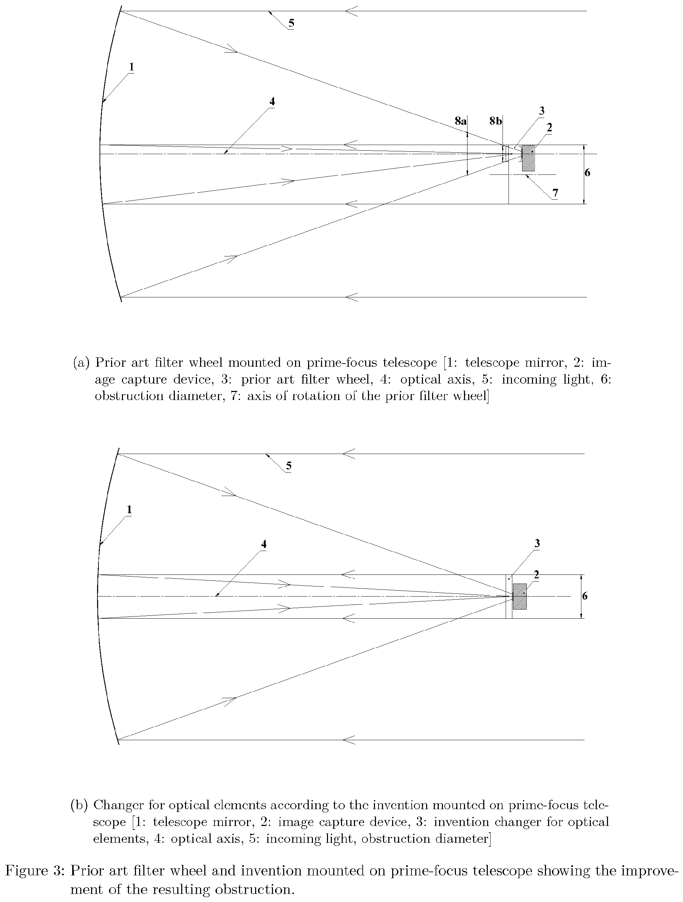

Prior art of optical element changing devices are so called filter wheels which comprise a set of optical filters mounted on a disk which moves them into the light path of attached optical devices by revolving. In order to achieve this, the prior art filter wheel's rotational axis is usually parallel but decentered (offset in x-y-plane) in respect to the path of light (z-axis) of the surrounding optical system, the filter wheel is embedded in (figure 1). An example of a prior art filter wheel can be found in US 6,567,225 B1.
International patent publication WO2004/001284 describes an apparatus for shaping a light beam in a lighting device comprising an occluding element which is rotatable about an axis parallel to the light beam, the axis of rotation of the occluding element being independently moveable along a path so as to provide a large number of possible lighting effects. British Patent Specification GB 802,427 discloses a device attachable to a telescope containing a carrier movably mounted therein and carrying filters which can be brought into the light path.
There are widely used optical systems which impose that the filter wheel must be placed in front of the telescope, thus causing obstruction of the incoming light. Prime-focus telescopes for instance are such systems. (figure 3). Prior art filter wheel designs possess certain shortcomings for such applications as follows:

a) When installed in front of telescopes (figure **3a**), prior art filter wheels cause substantial obstruction of the incoming light because of their proportionally large diameter depending on the number of housed filters. This results in a decreased image quality because of the reduction of the overall incoming light as well as less contrast and resolution of the image.

b) Moreover the obstruction caused is not centrosymmetric in respect to the telescope's optical axis (figure **3a**) which reduces the image quality of the whole field of view by uneven deformation of the observed objects.

c) By not being centered in respect to the overall optical systems light path (z-axis), the center of gravity is also decentered which causes unsymmetrical mechanical stress of the surrounding support structures. When capturing data while the overall optical system (usually a telescope with attached filter wheel and image capture device) is moving (in respect to the surrounding field of gravity) in order to follow the object of interest, the uneven mechanical load causes a certain deflection of the support structures. This results in a deformation of the observed object's image.

d) Furthermore it is vital for direct-driven telescope mounts to be balanced in directions perpendicular to the field of gravity. With prior art filter wheels, this can only be achieved by using additional counterweights which further increases the overall mechanical load.

e) Prior art filter wheels need an opening or respectively an empty holder for optical elements for the passing through of light without any interaction with one or more of the housed optical elements.

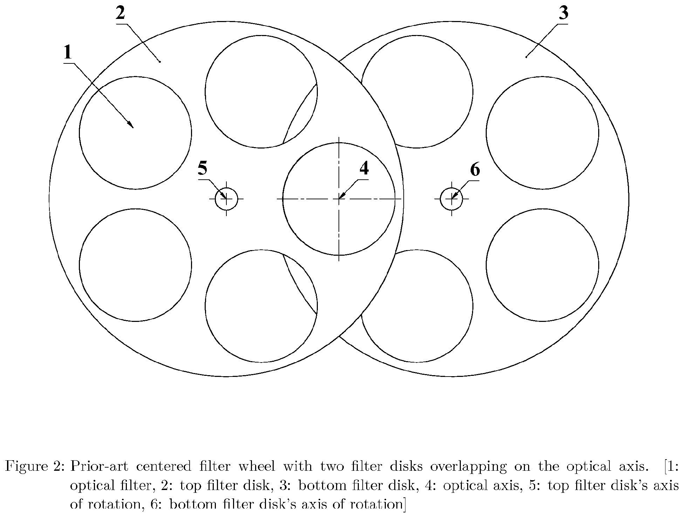

f) Prior art so-called 'centered filter wheels' do not overcome these problems. These filter wheels use two overlapping filter wheels to produce a symmetric obstruction. But by not being circular they still cause an unsatisfactory high amount of light obstruction. Furthermore this design implies that every rotary disk must have an empty holder or respectively an opening which cannot be used for mounting optical elements in order to enable the passing through of light without any interaction with one or more optical elements housed. An example of a prior art centered filter wheel is the 'CenterLine Dual Color Filter Wheel' by the company 'Finger Lakes Instrumentation'. Figure **2** depicts such a centered filter wheel.

What is needed is a circular as well as centrosymmetric (also referred to as point-symmetric) filter changer design in respect to the light path of attached optical devices (z-axis), which minimizes the overall obstruction per filter as well as the obstructing shape (this is ideally a perfect circle) as well as having a centered point of gravity.

**Objects of the invention**

- It is an object of this invention to implement a filter-changer design which minimizes the overall profile (in x-y-plane) responsible for obstruction, necessary for a specific number of filters. Respectively to maximize the relation of filter area to the outer body's profile.

- This invention also provides circular central obstruction (profile in x-y-plane).

- It is an object of the invention to eliminate the need for an empty holder (or opening which cannot be used for mounting optical elements) in order to let the incoming light pass without any interaction with the housed optical elements, thus maximizing the relation of usable optical elements to the needed space.

- Another object of the invention is placing the point of gravity as close a possible to the optical and symmetrical axis (z-axis).

- It is also an object of the invention to minimize the overall length (in z-direction) to enable the use of the smallest possible optical elements in combination with optical systems of short focal length (i.e. divergent path of light).

**Summary of the Invention**

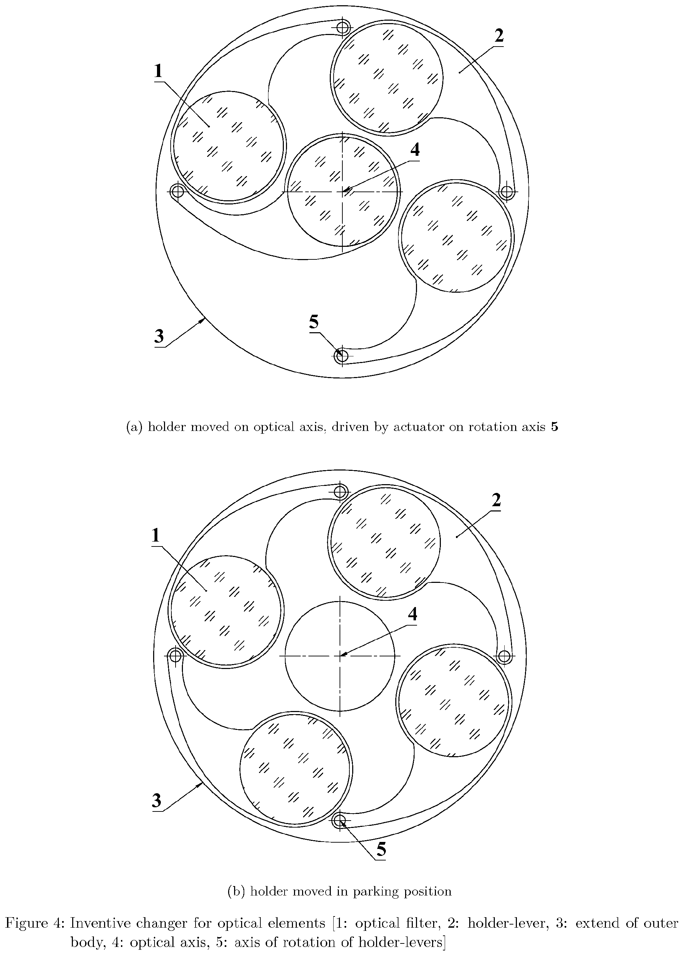

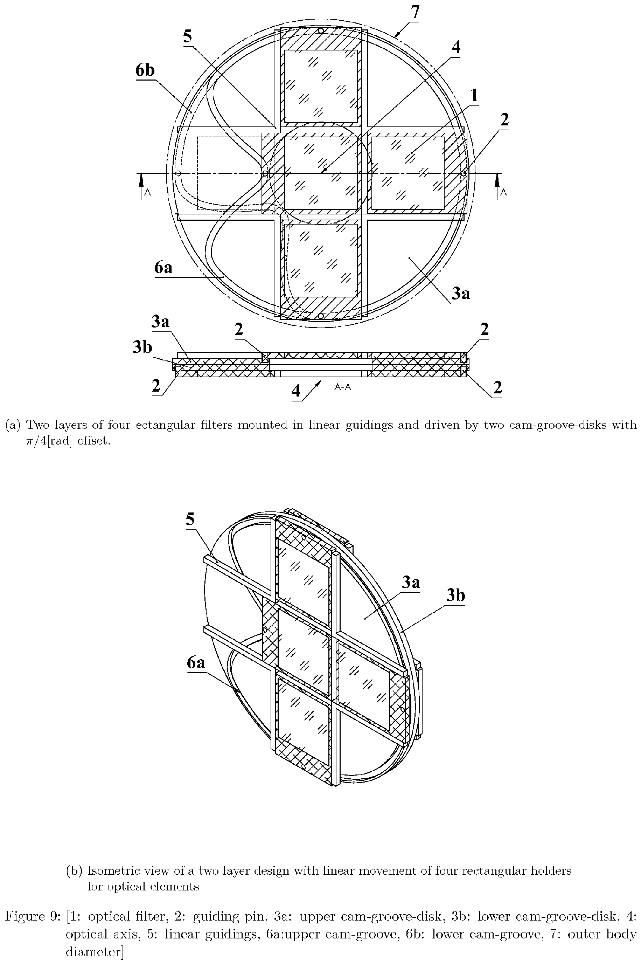

In order to overcome the problems imposed by prior art filter wheel designs detailed above, this invention implements a filter wheel design whose outer body's profile (in x-y-plane) is circular and centrosymmetric in respect to the path of light (z-axis) of the attached optical devices. This is achieved by arranging the optical filters symmetrically around the central opening for the passing light. The filters are moved into the optical axis and back into parking position by the means of levers (figure **4** or linear guidances (figure **9**) as described in detail in the following section.

By being circular and centrosymmetric in respect to the attached devices optical axis (z-axis), this design minimizes the overall profile of the filter-changer's outer body (in x-y-plane) and thus provides not only minimal, but also circular central obstruction of the incoming light. (figure **4** and **3b**) Furthermore the symmetry of the design results in the point of gravity also being very close to the optical axis. This reduces the mechanical stress of the surrounding support structure.

In order to obtain a wide field of view and a short integration time of the image capture device used in conjunction, telescopes often use a short focal length (or in respective a high focal ratio). This results in a convergent path of light and thus requires the optical filters (or polarizers and so on) to be placed as near as possible to the image capture device's sensor. Otherwise the filters farther from the sensor need to have a larger diameter, resulting in an increased obstruction of incoming light (refer to diameters 8a and 8b in figure **3a**). This invention improves the image quality by the means of reduced as well as shape optimized obstruction.

It also improves the weight distribution and mechanical length.

In order to optimize weight, reliability and cost, the invention incorporates different mechanisms capable of individually centering the filters on the optical axis.

Optical filters are the major application for the changing device described in this document and hence the further descriptions refer to optical filters in the effort to be consistent. However the further described changing device can also be used to place optical elements other than optical filters (detailed in the next section) into the optical path.

**Detailed description of the preferred embodiments**

The objects of the invention as described can be carried out in different ways.

1. Optical Elements:

a) Different kinds of optical elements can be used. Polarizers, lenses, field flatteners, wedges or prisms are examples of optical elements that can be used in conjunction with the invention. Optical filters are the most important optical elements for the application and thus the document mostly refers to them in the description of embodiments.

b) The optical elements can be of various shape. In figures **4** and **9** optical elements with circular and rectangular shape are depicted but other shapes can also be used in the embodiments of this invention.

c) The number of the optical elements can vary. The preferred embodiments of this invention is restricted to three to five optical elements in one layer. (figures **4** to **9** depict exemplary embodiments incorporating four optical filters for consistency and easier comparison of the different embodiments.)

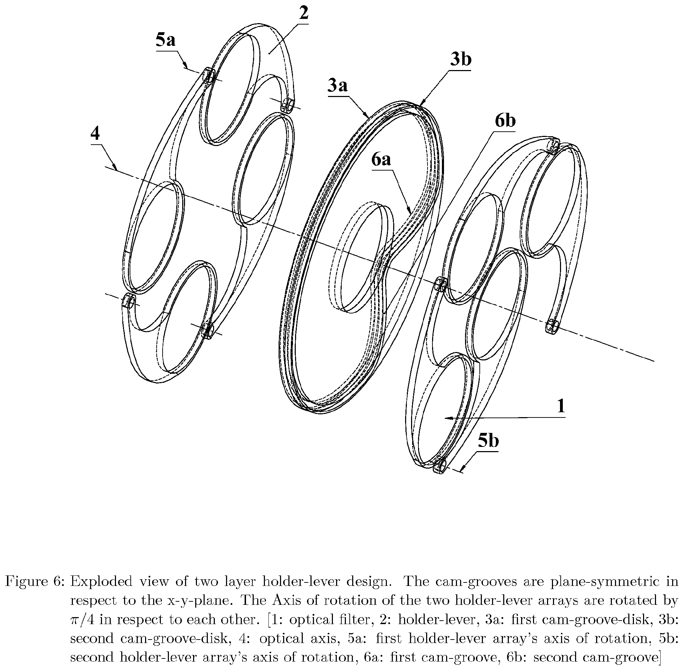

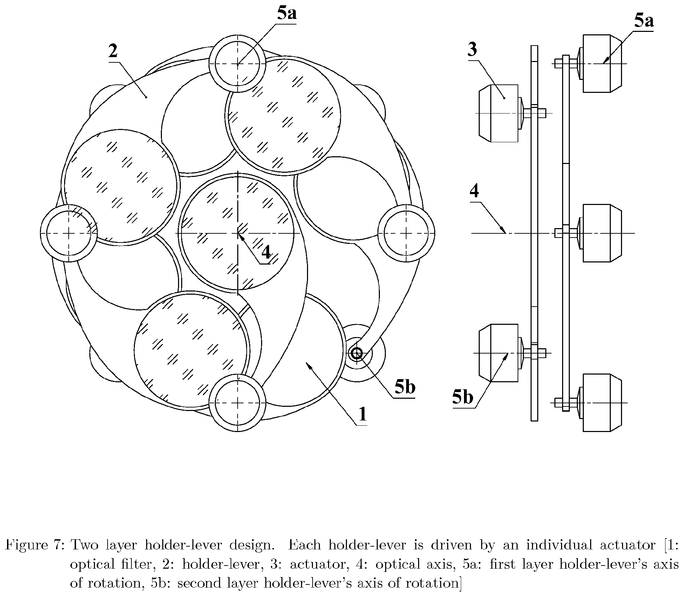

2. In the interest of minimizing the obstructing profile, while keeping the changing device for optical elements at a reasonable depth, multiple arrays (in x-y-plane) of individually movable holders for optical elements are placed behind each other (on z-axis) (figure **6** and **7**).

a) Using a cam-groove-disk, the individual movement of two holder layers can be carried out by a cam-groove on each side of the disk with a rotational offset of $N\pi/F$ [rad] ($F$, $N \in \mathbb{N}$) where $F$ is the number of holders for optical elements and $N$ is an integer multiple. A complementary design would be the same offset between the holder-lever's axis of rotation and a plane symmetric cam-groove-disk as depicted in figure **6.**

In order to combine optical elements of different layers, two separate cam-groove-disks i.e. one cam-groove-disk for each layer, is used.

3. The movement of the holders can be rotary or linear. (compare figure **4** to **8** with **9**)

a) The optical elements are mounted in holders, further called 'holder-levers' which can revolve around an axis of rotation in order to move the optical elements into the optical axis and back into parking position (figure **4a** and **4b**).

b) The optical elements are mounted in holders which carry out a linear movement towards the optical axis to move the holders in place. (figure **9**)

4. The individual movement of the holders may be carried out by different means of actuation.

a) The holders are moved by rotation.

- Individual actuators mounted on the axis of rotation move the optical elements individually by rotating the holder-levers. This comprises the possibility to combine optical elements of each array if desired (figure **7**).

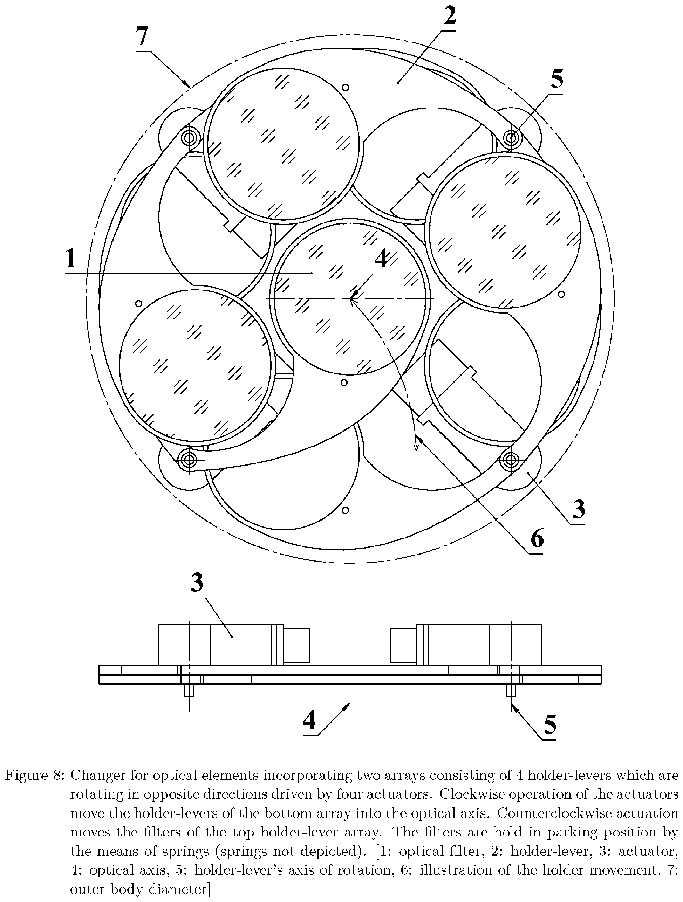

- Two holder-levers of different layers mounted on the same axis of rotation but facing opposite directions, i.e. revolving clockwise and counterclockwise are driven by the same actuator (figure **8**). The holder-levers are retained in parking position by a restoring force i.e. by springs (not depicted in figure). When the actuator revolves counterclockwise, a drive pin on the shaft will push the top holder-lever into the optical axis. By then revolving clockwise, the holder-lever is moved backwards into parking position by the spring. When revolving further than the initial position, the actuator will move the other holder-lever into the optical axis. (note that clockwise and counterclockwise rotation are interchangeable)

- Designs not using springs as a restoring force to move the holders back into parking position but using magnetic actuators (solenoid motors) or electric- or non-electric-magnets are another option to control the position of the levers which hold the optical elements.

b) Individual linear actuators (not depicted in drawing) move the holders mounted in linear guidings depicted in figure **9** into the optical axis and back.

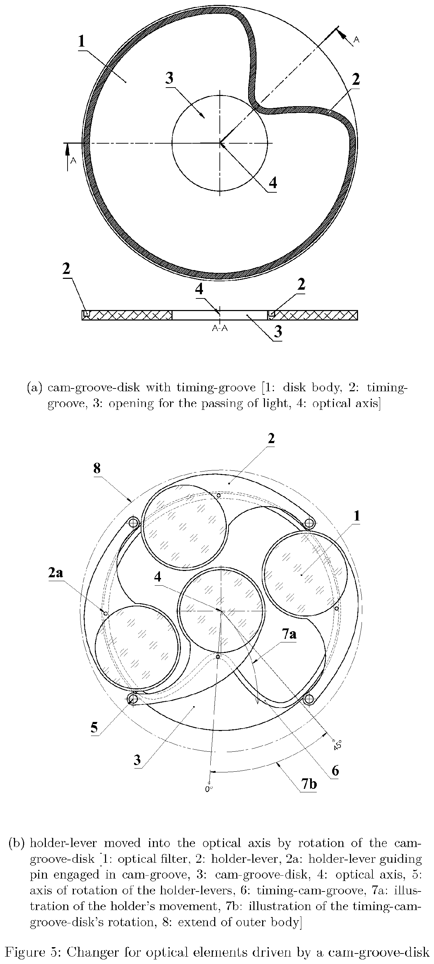

c) The movement of the holders for optical elements is driven by a rotary cam-groove-disk (figure **5** and **6**). The groove on the disk represents the timing function which is transmitted to each holder **2** by a pin **2a**, wheel, bearing (or other suitable pivot) on the holder. By revolving around the optical axis **4** the cam-groove-disk moves the optical elements into the optical axis and back into parking position one-by-one. The cam-groove-disk is pivot-mounted in the outer body of the changing device for optical elements and driven by a suitable actuator.

5. The actuation of the holders for optical elements or the cam-groove-disk can be carried out by different types of actuators.

a) Solenoid actuators and stepper motors are suitable for direct actuation of the filter holders. I.e. one actuator for each axis of rotation.

b) Stepper motors and servo drive motors are suitable for driving the cam-groove-disk by the means of a mechanical transmission. This can be a belt-drive or gear transmission.

6. The changing device as herein before described can also be used to place optical elements other than optical filter into the optical path. Examples of such other optical elements, apart from optical filters, are polarizers, lenses for example such as field flattening lenses, wedges or prisms to compensate for atmospheric refraction and the like.

**Detailed Drawings Description**

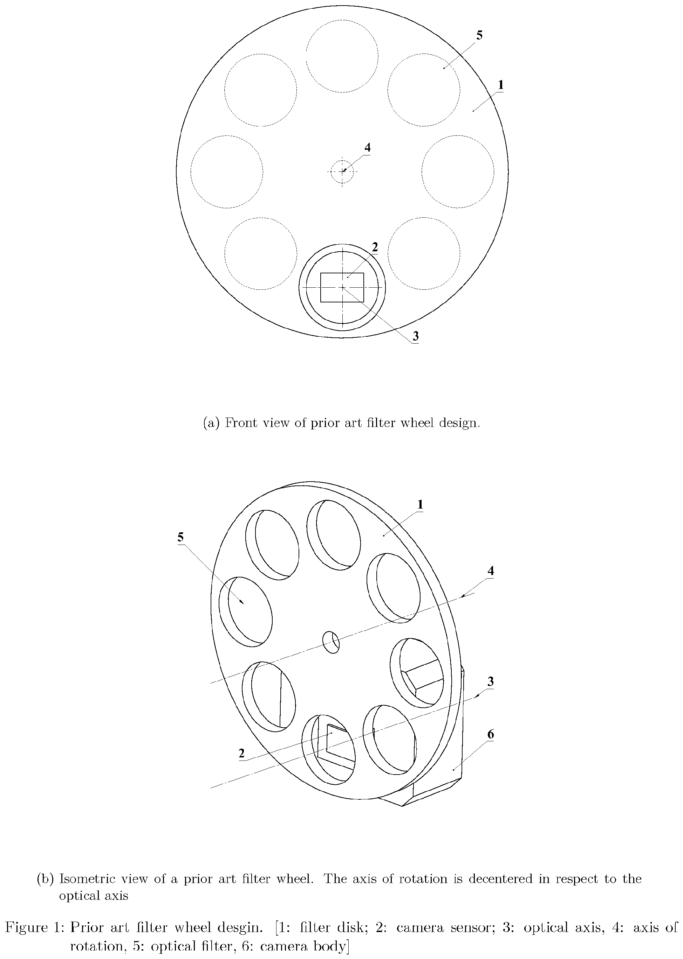

Figure 1: A common prior art filter wheel design. The filter wheel 1 houses a various number of optical filters **5.** It is mounted in a way that its rotational axis **4** is parallel to the optical axis **3** of the image-capture-device **6.** The individual filters are moved into the optical axis, respectively in front of the detection chip, **2** by rotation of the filter disk. It is clearly seen that the minimal possible obstruction caused by the filter wheel's outer diameter is not centro-symmetric in respect to the optical axis **3.**

Figure 2: A prior art 'centered-filter wheel' design. Two overlapping filter disks **2** and **3** move the optical filters **1** into the optical axis 4 by revolving around their axis of rotation **5** and **6.** One filter holder on each disk is needed to be empty in order not to shadow the other disks filter. This design provides symmetrical but not circular obstruction. Furthermore the obstructing area is unsatisfactorily large and two filter holders are left to be empty. Thus the relation between obstructing area and number of usable filters (i.e. the usable area of housed optical elements) is rather low.

Figure 3: a) Illustration of the resulting central obstruction (also referred to as central-vignetting) of a prime-focus telescope. When mounted on the camera **2** in the telescopes prime-focus (in front of the primary mirror **1**), the prior art filter wheel **3** causes non-symmetric obstruction **6** of the incoming light **5** in respect to the optical axis **4.** The diameters 8a and 8b illustrate the need for minimization of the filter-changer's mechanical length, because of the conergent beam of rays.

b) In contrast to prior art filter wheels the invention provides minimized and circular centrosymmetric obstruction while housing the same number of usable filters without the need for empty holders.

Figure 4: a) Circular centrosymmetric changer for optical elements with levers **2** for the movement of the holders for the optical elements **1.** The individual holders are moved into the optical axis **4** by rotation of the holder-levers **2** around the axis of rotation **5.** This movement can either be driven manually or by actuators directly mounted on, or respectively driving the axis of rotation **5.** figure **3a** shows a filter in working position.

b) The holder moved away from the optical axis **4** (respectively the opening in the center of the filter-changer for the passing through of light) into parking position.

Figure 5: a) Example of a cam-groove-disk drive for the holder movement. The disk **1** has a cam-groove **2** whose outer maximum diameter resembles the parking position of the holder-levers. The inner minimal diameter resembles the working position for the holder-levers.

b) The cam-grove-disk's timing function is transmitted to the holder-levers by the means of a pin **2** engaged with the groove **6 .** One full rotation ($2\pi$[rad]) of the disk in respect to the optical axis **4** (z-axis) will move all holders consecutively into the optical axis and back into parking position. The example demonstrates a design with $F = 4$ holders. Therefore the maximum rotation angle for the in-and-out movement of a single holder-lever must be smaller than $2\pi/4$[rad]. When $F = 5$ holders per plane are used, the rotation angle for a single holder's movement (in and out) would be $2\pi/5$[rad].

Figure 6: Exploded view of a two layer cam-groove-disk design. This figure depicts a plane-symmetrical cam-groove-disk with an offset of the holder-levers rotational axis **5a** and **5b** by $\pi/4$[rad].

Figure 7: Embodiment with two individual layers of holders for optical elements using individual actuators for each holder-lever.

Figure 8: Design example using one actuator for each of the four rotational axis. Counterclockwise rotation moves the holders in the upper layer into the optical axis. Clockwise rotation moves the lower holders (or vice versa). All filters are moved back into parking position the means of springs (or any other suitable mean of restoring force) when the actuator changes the direction of rotation.

Figure 9: Design example incorporating linear movement of the filters actuated by a cam-groove-disk and two symmetrical filter arrays on each side of the disk.

a) The rectangular holder frames **1** are mounted in linear guides **5.** The guiding pin **2** is engaged in the cam-groove **6a** and moves the holders into the optical axis **4** and back into parking position when the cam-groove-disk **3a** rotates. The figure also shows the second layer of holders and the second cam-groove **6b** which is rotated by $\pi/2$[*rad*] in respect to the optical axis (z-axis). Further rotation of the disk by $\pi/2$[*rad*] will result in the current working holder being moved into parking position while the next holder (of the second layer) is being moved simultaneously into the optical axis.

b) Isometric view of a two-layer cam-groove-disk design with rectangular holders for optical elements.

## Claims

1. A changing device for optical elements comprising:

    • an outer body which is circular and centrosymmetric with respect to a central opening (z-axis) that permits the passing through of light, and
    • one or more optical elements that are movably arranged (mounted) within said outer body,
    • wherein the optical elements can be moved manually or driven by one or more actuators into the center opening,
    • **characterized in that** the optical elements are selected from optical filters, polarizers, lenses, field flatteners, wedges or prisms, and
    • that the optical elements are moved into the optical axis and back into parking position by means of levers or linear guidances.

2. A changing device for optical elements according to claim 1 wherein the movable optical elements are arranged in one layer.

3. A changing device for optical elements according to claim 1 wherein the movable optical elements are arranged in more than one layers, placed behind each other in respect to the path of light (z-axis).

4. A changing device for optical elements according to claim 1-3 comprising either

    • linear movement of the optical elements
    • or rotary movement of levers on which the optical elements are mounted.

5. A changing device for optical elements according to claims 1-4 wherein the optical element's movement is made by one or more actuators.

6. A changing device for optical elements according to any preceding claim comprising a cam-groove-disk for controlling the movement of the optical elements into the center opening.

7. A changing device for optical elements according to any preceding claim comprising two planes of optical elements, controlled by one cam-groove-disk with a timing-groove on each side.

8. A changing device for optical elements according to any preceding claim comprising three, four or five optical elements in one plane.

9. A changing device for optical elements according to claim 6 comprising either

    • a rotational offset of the timing-grooves on each side of the disk of $N\pi/F$[rad] ($F, N \in \mathbb{N}$) where $F$ is the number of holders for optical elements and $N$ an integer multiple.
    • or a complementary design wherein the two layers are rotated in respect to each other (rotational axis being the z-axis) by $N\pi/F$[rad] instead of an offset of the two timing-grooves.

10. A changing device for optical elements according to any preceding claim comprising three, four, five, six, eight, or ten holders for optical elements.

11. A changing device for optical elements according to any preceding claim wherein the outer diameter (the diameter responsible for the amount of light obstruction in the x-y-plane according to the conventions defined in this document) is less or equal 3.5 times the diameter of an individual optical element.

12. A changing device for optical elements according to any preceding claim comprising the use of individual actuators for each optical element.

13. A changing device for optical elements according to any preceding claim comprising the use of individual actuators for each axis of rotation of the holder-levers, thus two levers of different layers that share an axis of rotation are moved by one actuator.

14. The usage of a changing device for optical elements according to any preceding claim on telescopes for earthbound as well as observation with telescopes mounted on air- and spacecrafts.

## Patentansprüche

1. Ein Gerät zum Wechseln optischer Elemente bestehend aus:

    • einem äußeren Gehäuse, welches kreisförmig und punktsymmetrisch im Bezug auf eine zentrale Öffnung (z-Achse) ist, welche einen Lichtdurchlass ermöglicht, und
    • einem oder mehreren optischen Elementen, welche in besagtem Gehäuse bewegbar gelagert sind,
    • und worin die optischen Elemente manuell oder angetrieben von einem oder mehreren Aktuatoren in die zentrale Öffnung bewegt werden können,
    • charakterisiert dadurch, dass die optischen Elemente optische Filter, Polarisatoren, Linsen, Bildebenungslinsen, optische Keile oder Prismen sein können, und
• dass die optischen Elemente in die optische Achse und zurück in Parkstellung mittels Hebeln oder Linearführungen bewegt werden.

2. Ein Gerät zum Wechseln von optischen Elementen gemäß Anspruch 1 worin die optischen Elemente in einer Ebene angeordnet sind.

3. Ein Gerät zum Wechseln von optischen Elementen gemäß Anspruch 1, worin die beweglichen optischen Elemente in mehr als einer Ebene angeordnet sind, hintereinander bezogen auf den Lichtpfad (z-Achse).

4. Ein Gerät zum Wechseln von optischen Elementen gemäß Anspruch 1-3 in welchem die optischen Elemente entweder:

    • geradlinig bewegt werden,
    • oder durch rotatorische Bewegung der Hebel in welchen Sie montiert sind.

5. Ein Gerät zum Wechseln von optischen Elementen gemäß Anspruch 1-4, worin die Bewegung der optischen Elemente druch einen oder mehrere Aktuatoren angetrieben wird.

6. Ein Gerät zum Wechseln von optischen Elementen gemäß allen zuvor genannten Ansprüchen, das eine Nocken-Nut-Scheibe beinhaltet, welche die Bewegung der optischen Elemente in die zentrale Öffnung kontrolliert.

7. Ein Gerät zum Wechseln von optischen Elementen gemäß allen zuvor genannten Ansprüchen, welches zwei Ebenen mit optischen Elementen enthält, die von einer Nocken-Nut-Scheibe mittels einer Steuernut auf jeder Seite gesteuert werden.

8. Ein Gerät zum Wechseln von optischen Elementen gemäß allen zuvor genannten Ansprüchen, welches drei, vier oder fünf optische Elemente in einer Ebene enthält.

9. Ein Gerät zum Wechseln von optischen Elementen gemäß Anspruch 6, welches entweder

    • einen rotatorischen Offset der Steuernut auf jeder Seite der Scheibe von $N*pi/F[rad]$ mit $F$=Anzahl der Halter für optische Elemente und $N$=ganze Zahl besitzt,
    • oder eine komplemetäres Ausführung in der die zwei Ebenen einen gegenseitigen Offset von $N*pi/F$ (Die Rotationsachse ist die z-Achse), anstatt eines Offsets der zwei Steuernuten.

10. Ein Gerät zum Wechseln von optischen Elementen gemäß allen zuvor genannten Ansprüchen, welches drei, vier, fünf, sechs, acht oder zehn Halter für optische Elemente enthält.

11. Ein Gerät zum Wechseln von optischen Elementen gemäß allen zuvor genannten Ansprüchen, dessen äußerer Durchmesser (der Durchmesser, welcher für die Obstruktion des einfallenden Lichtes in der x-y-Ebene gemäß der in diesem Dokument definierten Konventionen verantwortlich ist) kleiner oder gleich dem 3,5fachen Durchmesser eines der optischen Elemente ist.

12. Ein Gerät zum Wechseln von optischen Elementen gemäß allen zuvor genannten Ansprüchen, welches einzelne Aktuatoren für jedes optische Element beinhaltet.

13. Ein Gerät zum Wechseln von optischen Elementen gemäß allen zuvor genannten Ansprüchen, mit einzelnen Aktuatoren für jede Rotationsachse der Halterhebel, wobei zwei Hebel aus verschiedenen Ebenen, die eine gemeinsame Rotationsachse teilen, jeweils von einem Aktuator bewegt werden.

14. Die Verwendung eines Wechslers für optische Elemente gemäß allen zuvor genannten Ansprüchen an Teleskopen für erdgebundene Observationen, sowie mit an Luft- oder Raumfahrzeugen angebrachte Teleskopen.

**Revendications**

1. Un dispositif de changement pour des éléments optiques comprenant :

    • un corps extérieur qui est rond et centrosymétrique par rapport à l'ouverture centrale (axe des z) qui permet le passage de la lumière et avec
    • un ou plusieurs éléments optiques arrangés (montés) de manière mobile dans le corps extérieur décrit,
    • où les éléments optiques peuvent être déplacés manuellement ou entraînés dans l'ouverture centrale par un ou plusieurs actionneurs,
    • **caractérisé par le fait que** les éléments optiques sont sélectionnés à partir de filtres optiques, polariseurs, lentilles, aplanisseurs de champ, coins ou prismes et
    • **par le fait que** les éléments optiques sont amenés dans l'axe optique et ramenés à la position d'attente par le biais de leviers ou de guidages linéaires.

2. Un dispositif de changement pour des éléments optiques selon la revendication 1 où les éléments optiques mobiles sont arrangés dans un plan.

**3.** Un dispositif de changement pour des éléments optiques selon la revendication 1 où les éléments optiques mobiles sont arrangés dans plusieurs plans et placés l'un derrière l'autre par rapport au chemin de la lumière (axe des z).

**4.** Un dispositif de changement pour des éléments optiques selon les revendications 1-3 comprenant soit

  • un dispositif de déplacement linéaire pour les éléments optiques,
  • soit un mouvement rotatif de leviers sur lesquels les éléments optiques sont montés.

**5.** Un dispositif de changement pour des éléments optiques selon les revendications 1-4 où le déplacement des éléments optiques est assuré par un ou plusieurs actionneurs.

**6.** Un dispositif de changement pour des éléments optiques selon l'une quelconque des revendications précédentes comprenant un disque avec came à rainure pour la commande du déplacement des éléments optiques dans l'ouverture centrale.

**7.** Un dispositif de changement pour des éléments optiques selon l'une quelconque des revendications précédentes comprenant deux plans à éléments optiques commandés par un disque avec came à rainure muni d'une rainure de synchronisation de chaque côté.

**8.** Un dispositif de changement pour des éléments optiques selon l'une quelconque des revendications précédentes comprenant trois, quatre ou cinq éléments optiques dans un plan.

**9.** Un dispositif de changement pour des éléments optiques selon la revendication 6 comprenant soit

  • un décalage angulaire des rainures de commande de chaque côté du disque de $N\pi/F$ [rad] ($F, N \in$ N) où $F$ est égal au nombre de supports pour les éléments optiques et où $N$ est un multiple entier
  • soit un design complémentaire où deux plans sont pivotés l'un par rapport à l'autre (l'axe de rotation étant l'axe des z) par $N\pi/F$ [rad] au lieu d'un décalage des deux rainures de commande.

**10.** Un dispositif de changement pour des éléments optiques selon l'une quelconque des revendications précédentes comprenant trois, quatre, cinq, six, huit ou dix supports pour des éléments optiques.

**11.** Un dispositif de changement pour des éléments optiques selon l'une quelconque des revendications précédentes où le diamètre extérieur (le diamètre auquel la quantité de luminosité bloquée dans les plans des x-y est dû selon les conventions définies dans ce document) est inférieur ou égal au diamètre d'un élément optique individuel.

**12.** Un dispositif de changement pour des éléments optiques selon l'une quelconque des revendications précédentes comprenant l'utilisation d'actionneurs individuels pour chaque élément optique.

**13.** Un dispositif de changement pour des éléments optiques selon l'une quelconque des revendications précédentes comprenant l'emploi d'actionneurs individuels pour chaque axe de rotation des leviers de retenue ; deux leviers de plans différents qui partagent un axe sont donc commandés par un actionneur.

**14.** L'usage d'un dispositif de changement pour des éléments optiques selon l'une quelconque des revendications précédentes sur des télescopes pour des observations terrestres ou bien sur des télescopes montés sur des avions et des vaisseaux spatiaux.

(a) Front view of prior art filter wheel design.

(b) Isometric view of a prior art filter wheel. The axis of rotation is decentered in respect to the optical axis

Figure 1: Prior art filter wheel desgin. [1: filter disk; 2: camera sensor; 3: optical axis, 4: axis of rotation, 5: optical filter, 6: camera body]

Figure 2: Prior-art centered filter wheel with two filter disks overlapping on the optical axis. [1: optical filter, 2: top filter disk, 3: bottom filter disk, 4: optical axis, 5: top filter disk's axis of rotation, 6: bottom filter disk's axis of rotation]

(a) Prior art filter wheel mounted on prime-focus telescope [1: telescope mirror, 2: image capture device, 3: prior art filter wheel, 4: optical axis, 5: incoming light, 6: obstruction diameter, 7: axis of rotation of the prior filter wheel]

(b) Changer for optical elements according to the invention mounted on prime-focus telescope [1: telescope mirror, 2: image capture device, 3: invention changer for optical elements, 4: optical axis, 5: incoming light, obstruction diameter]

Figure 3: Prior art filter wheel and invention mounted on prime-focus telescope showing the improvement of the resulting obstruction.

(a) holder moved on optical axis, driven by actuator on rotation axis **5**

(b) holder moved in parking position

Figure 4: Inventive changer for optical elements [1: optical filter, 2: holder-lever, 3: extend of outer body, 4: optical axis, 5: axis of rotation of holder-levers]

(a) cam-groove-disk with timing-groove [1: disk body, 2: timing-groove, 3: opening for the passing of light, 4: optical axis]

(b) holder-lever moved into the optical axis by rotation of the cam-groove-disk [1: optical filter, 2: holder-lever, 2a: holder-lever guiding pin engaged in cam-groove, 3: cam-groove-disk, 4: optical axis, 5: axis of rotation of the holder-levers, 6: timing-cam-groove, 7a: illustration of the holder's movement, 7b: illustration of the timing-cam-groove-disk's rotation, 8: extend of outer body]

Figure 5: Changer for optical elements driven by a cam-groove-disk

Figure 6: Exploded view of two layer holder-lever design. The cam-grooves are plane-symmetric in respect to the x-y-plane. The Axis of rotation of the two holder-lever arrays are rotated by $\pi/4$ in respect to each other. [1: optical filter, 2: holder-lever, 3a: first cam-groove-disk, 3b: second cam-groove-disk, 4: optical axis, 5a: first holder-lever array's axis of rotation, 5b: second holder-lever array's axis of rotation, 6a: first cam-groove, 6b: second cam-groove]

Figure 7: Two layer holder-lever design. Each holder-lever is driven by an individual actuator [1: optical filter, 2: holder-lever, 3: actuator, 4: optical axis, 5a: first layer holder-lever's axis of rotation, 5b: second layer holder-lever's axis of rotation]

Figure 8: Changer for optical elements incorporating two arrays consisting of 4 holder-levers which are rotating in opposite directions driven by four actuators. Clockwise operation of the actuators move the holder-levers of the bottom array into the optical axis. Counterclockwise actuation moves the filters of the top holder-lever array. The filters are hold in parking position by the means of springs (springs not depicted). [1: optical filter, 2: holder-lever, 3: actuator, 4: optical axis, 5: holder-lever's axis of rotation, 6: illustration of the holder movement, 7: outer body diameter]

(a) Two layers of four ectangular filters mounted in linear guidings and driven by two cam-groove-disks with $\pi/4[\mathrm{rad}]$ offset.

(b) Isometric view of a two layer design with linear movement of four rectangular holders for optical elements

Figure 9: [1: optical filter, 2: guiding pin, 3a: upper cam-groove-disk, 3b: lower cam-groove-disk, 4: optical axis, 5: linear guidings, 6a:upper cam-groove, 6b: lower cam-groove, 7: outer body diameter]

**EP 3 203 296 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6567225 B1
- WO 2004001284 A
- GB 802427 A